**Europäisches Patentamt**

**European Patent Office**

**Office européen des brevets**

(19)

(11) Veröffentlichungsnummer: **0 177 720 B1**

# EUROPÄISCHE PATENTSCHRIFT

(12)

(45) Veröffentlichungstag der Patentschrift: **06.03.91**

(51) Int. Cl.⁵: **A47J 27/09**

(21) Anmeldenummer: **85110414.1**

(22) Anmeldetag: **20.08.85**

(54) **Kochgefäss.**

(30) Priorität: **14.09.84 DE 3433794**

(43) Veröffentlichungstag der Anmeldung:
**16.04.86 Patentblatt 86/16**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL**

(56) Entgegenhaltungen:
| | |
|---|---|
| CH-A- 272 798 | DE-A- 2 547 066 |
| DE-C- 931 800 | FR-A- 985 987 |
| FR-A- 2 455 874 | GB-A- 2 135 429 |
| US-A- 2 667 891 | US-A- 2 710 627 |

(73) Patentinhaber: **FISSLER GMBH**
**Im Wörth 2 Postfach 12 23 20**
**W-6580 Idar-Oberstein 2(DE)**

(72) Erfinder: **Bessenbach, Hans c/o KEIL &**
**SCHAAFHAUSEN**
**Patentanwälte Ammelburgstrasse 34**
**W-6000 Frankfurt am Main 1(DE)**
Erfinder: **Niese, Karl c/o KEIL & SCHAAFHAU-**
**SEN**
**Patentanwälte Ammelburgstrasse 34**
**W-6000 Frankfurt am Main 1(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

**Beschreibung**

Die Erfindung bezieht sich auf einen Kochtopf, bei welchem Untertopf und Topfdeckel, beispielsweise mittels eines Bajonettverschlusses, druckdicht miteinander zu verbinden sind, mit einer dicht oberhalb des Siedepunktdruckes ansprechenden Druckanzeigeeinrichtung und einer gesondert von der Druckanzeigeeinrichtung ausgebildeten Druckentlastungseinrichtung, wobei die Druckanzeigeeinrichtung aufgrund eines beweglichen Anzeigekörpers eine möglichst ebene Kennung, d.h. eine im wesentlichen konstante Rückstellkraft aufweist, sowie beim Ankochen oberhalb des Siedepunktdruckes vor dem Öffnen der Druckentlastungseinrichtung anspricht.

Ein derartiger Kochtopf ist im wesentlichen aus der DE-C-931 800 bekannt. Der dort beschriebene mit Innendruck arbeitende Dampfdruckkochtopf weist eine Überdruck-Melde- und Sicherungseinrichtung auf. Die Überdruck-Sicherungseinrichtung weist im Halsteil eines hohlen Griffknaufes auf der Außenseite des Topfdeckels gebildeten, mit der Innenseite durch einen Kranz von Bohrungen in Verbindung stehenden Ringkanal und einen diesen Ringkanal unter Zugspannung umgebenden und an dessen Rändern dichtend anliegenden nachgiebigen Ring aus Gummi auf, um zu erreichen, daß beim Ansprechen der Überdruck-Meldeeinrichtung die Heizeinrichtung für den Kochtopf kleiner gestellt und damit eine Betätigung der Sicherungseinrichtung in der Regel vermieden werden kann. Die Überdrucksicherung wird mit der in der Mitte des Griffknaufes angeordneten optischen Überdruck-Meldeeinrichtung derart zusammen, daß diese bei Erreichen eines Druckes entsprechend einer unteren Dämpfungstemperatur von 102° C und die Überdrucksicherung bei einer höheren Temperatur von etwa 105 bis 107° C anspricht.

Ein mit einer derartigen Überdruck-Melde- und Sicherungseinrichtung ausgestatteter Kochtopf spricht jedoch verhältnismäßig spät und ungleichmäßig an, und die Druckentlastungseinrichtung gewährleistet kein Kochen bei möglichst niedrigem Druck unmittelbar oberhalb der Siedetemperatur.

Weiterhin sind als Dampfdruckkochtöpfe oder Schnellkochtöpfe ausgestattete Kochtöpfe bekannt (vgl. z.B. DE-OS 25 47 066 oder DE-OS 31 08 017), in welchen mit verhältnismäßig hohem Druck und hoher Temperatur gekocht wird. Das gemäß DE-OS 25 47 066 vorgesehene Kochventil vereinigt zu diesem Zweck beispielsweise in sich eine Druckanzeigeeinrichtung und eine Druckentlastungseinrichtung. Die Druckanzeigeeinrichtung weist einen unter dem Topfinnendruck gegen die Wirkung einer Schraubenlinienfeder axial anhebbaren Anzeigestift auf, welcher sich auf einer Rollmembrane abstützt, welche auf der dem Anzeigestift gegenüberliegenden Seite mit dem Topfinnendruck beaufschlagt wird. Mit ansteigendem Topfinnendruck bewegt sich der Anzeigestift allmählich mit seinem oberen Ende aus dem Ventilgehäuse, wobei der Topfinnendruck und der von der Schraubenlinienfeder augeübte Gegendruck jeweils im Gleichgewicht stehen. Die Druckentlastungseinrichtung hat einen von einer Schraubenlinienfeder gegen einen Ventilsitz gedrückten Ventilkörper, welcher bei Überschreiten eines im wesentlichen durch den von der Schraubenlinienfeder ausgeübten Gegendruckes von dem Ventilsitz abhebt und den Topfinnenraum entlüftet. Sowohl die Druckanzeigeeinrichtung, was übrigens auch bei der aus der DE-OS 31 08 017 bekannt gewordenen Druckanzeigeeinrichtung der Fall ist, als auch die Druckentlastungseinrichtung weisen aufgrund der progressiven Kennung der verwendeten Schraubenlinienfedern eine erhebliche Trägheit bzw. Hysterese auf. Sinn derartiger Dampfdruck-bzw. Schnellkochtöpfe ist es, bei einem Druck erheblich über dem Normaldruck und daher bei einer Temperatur erheblich über dem normalen Siedepunkt von 100° C zu kochen und dadurch den Kochvorgang abzukürzen. Aufgrund der hohen Temperatur können jedoch Wertestoffe, z.B. Vitamine, des Kochgutes beeinträchtigt werden.

Es ist auch das sogenannte "wasserarme Garen" bekannt, bei welchem ohne Druckerhöhung nur wenig Wasser mit dem Kochgut bis auf die normale Siedetemperatur erhitzt wird. Danach wird die Energiezufuhr heruntergeschaltet, so daß deutlich unter dem Siedepunkt, beispielsweise bei ca. 70° C, weitergekocht wird. Dabei erfolgt eine Kondensation des verdampfenden Wassers an dem kalten Topfdeckel. Das Kondenswasser fließt in den Untertopf zurück, so daß praktisch wasserverlustfrei gekocht werden kann. Aufgrund der niedrigeren Kochtemperatur dauert jedoch der Garungsprozeß hierbei relativ lang, was ebenfalls zur Beeinträchtigung von Wertstoffen des Kochgutes, wie Vitaminen, führt; zusätzlich bedingt es lange Wartezeiten für die Bedienungsperson.

Aufgabe der vorliegenden Erfindung ist es, einen Kochtopf der eingangs genannten Gattung vorzuschlagen, mit welchem bei einfacher und zuverlässiger Konstruktion von Druckanzeigeeinrichtung und Druckentlastungseinrichtung ein schonenderes Kochen bei nicht zu hoher Temperatur, aber noch annehmbarer Kochzeit möglich ist.

· Diese Aufgabe wird erfindungsgemäß im wesentlichen dadurch gelöst, daß sich der Anzeigekörper der Druckanzeigeeinrichtung auf einer Seite einer Membrane, z.B. Rollmembrane, derart abstützt, daß der Anzeigekörper ausschließlich oder praktisch ausschließlich aufgrund seines Eigengewichts der Verformung der Membrane unter dem Topfinnendruck entgegenwirkt, daß die andere Seite der Membrane über eine Öffnung im Topfdeckel dem Topfinnendruck ausgesetzt ist, daß die Druckentlastungseinrichtung eine möglichst ebene Kennung, dh. eine im wesentlichen konstante Rückstellkraft aufweist, indem ein Ventilkörper ausschließlich oder praktisch ausschließlich aufgrund seines Eigengewichts in Schließrichtung beaufschlagt ist sowie beim Weiterkochen unter dem sich beim Siedepunkt bei Umgebungsdruck, also nahe 100° C, einstellenden Druck gerade öffnet.

Bei dem erfindungsgemäßen Kochtopf stützt sich im Gegensatz zur bekannten Melde- und Sicherungseinrichtung der Anzeigekörper also auf einer Seite der Membrane ab, während die andere Seite der Membrane über eine Öffnung im Topfdeckel dem Topfinnendruck derart ausgesetzt ist, daß die Druckanzeigeeinrichtung dicht oberhalb des Siedepunktdruckes anspricht und der Anzeigekörper schlagartig hochschnappt. Dies wird auf einfache Weise erreicht, weil der Anzeigekörper ausschließlich oder praktisch ausschließlich aufgrund seines Eigengewichts der Verformung der Membrane unter dem Topfinnendruck entgegenwirkt. Aufgrund dieser Eigenschaften zeigt die Druckanzeigeeinrichtung unmittelbar nach Erreichen des Siedepunktdruckes an, daß dieser und nicht irgendein u.U. erheblich über dem Siedepunktdruck liegender Druck erreicht ist. Es läßt sich damit jederzeit einwandfrei bspw. optisch erkennen, ob der Siedepunktdruck entweder erreicht oder nicht erreicht ist. Dabei ist sichergestellt, daß die Druckanzeigeeinrichtung eher anspricht als die Druckentlastungseinrichtung. Die Druckentlastungseinrichtung ist nach der Erfindung so ausgebildet, daß sie ebenfalls eine möglichst ebene Kennung aufweist sowie beim Weiterkochen unter dem sich beim Siedepunkt bei Umgebungsdruck, also nahe 100° C einstellenden Druck gerade öffnet. Die erfindungsgemäße Druckentlastungseinrichtung hat damit, ebenfalls im Gegensatz zu den bekannten Vorschlägen, keine progressive Kennung, sondern eine im wesentlichen ebene Kennung, wobei ein Ventilkörper der Druckentlastungseinrichtung ausschließlich oder praktisch ausschließlich aufgrund seines Eigengewichts in Schließstellung beaufschlagt ist. Diese Eigenschaft der Druckentlastungseinrichtung stellt sicher, daß zwar beim Weiterkochen die Siedetemperatur gerade noch, aber nicht wesentlich, überschritten wird, so daß hinreichend schnell, aber doch schonend gekocht werden kann.

Aufgrund der erfindungsgemäßen Ausgestaltung des Kochtopfes spielt sich der Kochvorgang wie folgt ab: Zunächst wird bei maximal möglicher Kochstufe der Energiequelle, also beispielsweise der Kochplatte, angekocht. Sobald der Siedepunktdruck im Topfinneren erreicht ist, springt die Druckanzeigeeinrichtung auf "Siedepunktdruck erreicht". Die Bedienungsperson schaltet dann unverzüglich die Energiequelle auf die niedrigstmögliche Kochstufe, bei welcher der sich in dem Topfinneren aufbauende Druck nur geringfügig oberhalb des Siedepunktdruckes und auch des Ansprechdruckes der Druckanzeigeeinrichtung ansteigt. Die Druckentlastungseinrichtung ist nun so ausgestaltet und eingestellt, daß sie unter diesem Druck, welcher sich bei der niedrigst eingestellten Kochstufe der Energiequelle, also beispielsweise der Kochplatte, einstellt, gerade öffnet. Das Kochgut kocht damit also gerade ohne wesentlichen Temperaturanstieg über die Siedetemperatur bei Umgebungsdruck weiter, während unter Berücksichtigung der im wesentlichen ebenen Kennung der Druckentlastungseinrichtung in zeitlichen Abständen eine Druckentlastung des Topfinnenraumes stattfindet. Hierdurch wird gewährleistet, daß die Temperatur zwar über, aber nicht wesentlich über der Siedetemperatur bei Umgebungsdruck liegt und nur geringe Mengen an Dampf abgegeben werden. Es kann also bei wenig Wasserverlust und im Vergleich zum sogenannten wasserarmen Garen hoher Temperatur schonend gekocht werden. Damit erfolgt bei Weiterkochen eine selbsttätige und schnelle Regelung von Topfinnendruck und Kochtemperatur, welche aufgrund der Trägheit der üblichen Energiequellen, wie Kochplatten, nicht möglich wäre.

Die Vorteile der Erfindung ergeben sich insbesondere daraus, daß das Erreichen des Siedepunktdruckes sofort angezeigt wird, die Bedienungsperson von der höchsten Kochstufe auf die wesentlich darunter liegende niedrigste Kochstufe umschalten kann und dann ein Weiterkochen bei der gewünschten nahezu unter Normaldruck herrschenden Siedetemperatur und nicht wesentlich darüber oder darunter erfolgt.

Wenn im Vorstehenden davon die Rede ist, daß die Druckanzeigeeinrichtung eine "möglichst ebene" Kennung haben soll, so ist darunter zu verstehen, daß ihre Rückstellkraft im wesentlichen konstant ist und nicht mit der Auslenkung ansteigt. Für die Kennung der Druckentlastungseinrichtung, die "möglichst eben" sein soll, gilt das gleiche.

Der Umstand, daß die Druckanzeigeeinrichtung "möglichst dicht oberhalb" des Siedepunktdruckes ansprechen soll, bedeutet, daß die Differenz zwischen Ansprechdruck und Siedepunktdruck nur wenige tausendstel bis hundertstel bar betragen soll.

Die Charakterisierung, wonach die Druckentlastungseinrichtung beim Weiterkochen unter dem sich bei niedrigstmöglicher Kochstufe einstellenden Druck "gerade öffnet", bedeutet, daß sich in dem Topfinnenraum kein wesentlicher Überdruck und auch keine wesentlich über der normalen Siedetemperatur liegende Temperatur aufbauen kann.

Die Konstruktion von Druckanzeigeeinrichtung und Druckentlastungseinrichtung und deren Austauschbarkeit werden dadurch wesentlich vereinfacht und ihre Funktion besonders zuverlässig, wenn sie voneinander unabhängig im Topfdeckel untergebracht werden können.

Bei Dampfdruckkochtöpfen (vgl. z.B. die DE-OS 25 47 066 oder DE-OS 31 08 017) ist es bekannt, daß die Druckanzeigeeinrichtung einen sich auf einer Seite einer Membrane, z.B. Rollmembrane, abstützenden, linear verschiebbaren oder drehbaren Anzeigekörper aufweist, und daß die andere Seite der Membrane dem Topfinnendruck ausgesetzt ist. Unter Verwendung dieser Konstruktion kann der Erfindungsgedanke dadurch relisiert werden, daß die Verformung der Membrane und damit die entsprechende Bewegung des Anzeigekörpers hysteresefrei oder praktisch hysteresefrei, also insbesondere ohne Abstützung gegen eine Feder mit progressiver Kennung erfolgt.

Eine besonders einfache und dennoch zuverlässig arbeitende Ausführungsform erhält man ferner dann, wenn der Anzeigekörper axial geführt ist.

Die Regelcharakteristik der Druckanzeigeeinrichtung ist dann besonders günstig, wenn die Membrane der Druckanzeigeeinrichtung im Bereich der Anlagefläche des Anzeigekörpers auf der dem Topfdeckel zugewandten Seite eine Öffnung des Topfdeckels ringförmig umgebende scharfe Kante aufweist, mit welcher sie vor dem Ansprechen der Druckanzeigeeinrichtung an der Außenfläche des Topfdeckels anliegt. Dann steht nämlich bis zum Ansprechen der Druckanzeigeeinrichtung der Topfinnendruck an einer verhältnismäßig kleinen Fläche der Membrane an, während die mit dem Topfinnendruck beaufschlagte Fläche beim geringfügigen Anheben des Anzeigekörpers und Abheben der Membrane mit der scharfen Kante von der Deckeloberfläche schlagartig erheblich größer wird und dadurch der Anzeigekörper rasch nach oben schnappt.

Die gleiche Wirkung kann erzielt werden, wenn die Membrane der Druckanzeigeeinrichtung im Bereich der Anlagefläche des Anzeigekörpers vor dem Ansprechen der Druckanzeigeeinrichtung mit der dem Topfdeckel zugewandten Seite an einer eine Öffnung des Topfdeckels ringförmig umgebenden scharfen Kante des Topfdeckels anliegt.

Bei üblichen Dampfdruckkochtöpfen (vgl. die DE-OS 25 47 066) ist es ferner bekannt, daß die Druckentlastungseinrichtung einen axial geführten Ventilkörper aufweist, welcher unter einem Topfinnendruck oberhalb eines vorgegebenen Wertes von einem Ventilsitz abhebt. Ausgehend von dieser konstruktiven Lösung ist bei einer weiteren Ausgestaltung der Erfindung vorgesehen, daß der Ventilkörper der Druckentlastungseinrichtung axial geführt und derart ausgebildet ist, daß er unter einem Topfinnendruck oder eines vorgegebenen Wertes von einem Ventilsitz abhebt und daß der Ventilkörper insbesondere ohne Abstützung gegen eine Feder mit progressiver Kennung und damit ausschließlich oder praktisch ausschließlich aufgrund seines Eigengewichts in Schließrichtung beaufschlagt ist.

Für die Regelcharakteristik der Druckentlastungseinrichtung ist es ferner von besonderem Vorteil, wenn der Ventilkörper der Druckentlastungseinrichtung in Schließstellung mit einer eine Öffnung des Topfdeckels ringförmig umgebenden scharfen Kante auf dem Ventilsitz des Topfdeckels aufsitzt.

Mit gleicher Wirkung kann der Ventilkörper der Druckentlastungseinrichtung in Schließstellung auf einer eine Öffnung des Topfdeckels ringförmig umgebenden scharfen Kante des Topfdeckels aufsitzen.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt:

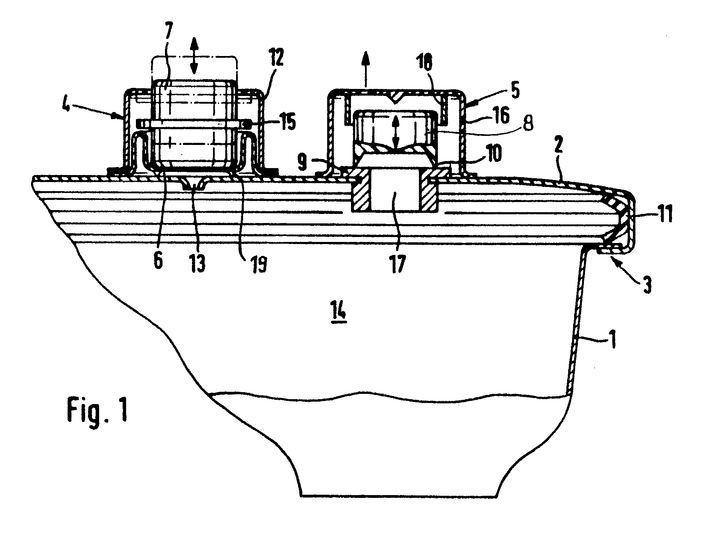

Fig. 1    schematisch im Vertikalschnitt einen die Erfindung aufweisenden Kochtopf, und

Fig. 2    eine grafische Darstellung der Druckverhältnisse, welche beim Kochen mit einem die Erfindung aufweisenden Kochtopf herrschen.

Der Kochtopf besteht, beispielsweise wie bei einem herkömmlichen Dampdruckkochtopf, aus einem Untertopf 1 und einem Topfdeckel 2, welche mit Hilfe eines Bajonettverschlusses 3 unter Zwischenlage eines Dichtungsringes 11 druckdicht miteinander zu verbinden sind. Im Topfdeckel 2 sind getrennt voneinander eine Druckanzeigeeinrichtung 4 und eine Druckentlastungseinrichtung 5 angeordnet. Die Druckanzeigeeinrichtung 4 hat einen in einem Gehäuse 12 vertikal verschieblich geführ ten stiftförmigen Anzeigekörper 7. Der Anzeigekörper 7 stützt sich auf einer in diesem Fall als Rollmembrane ausgebildeten Membrane 6 ab. Der Raum des Gehäuses 12 unterhalb der Membrane 6 steht über eine Öffnung 13 in Verbindung mit dem Topfinnenraum 14. Die Membrane 6 liegt im druckentlasteten Zustand mit einer ringförmigen die Öffnung 13 umgebenden scharfen Kante 19 an der Oberseite des Topfdeckels 2 an. Das Gewicht des Anzeigekörpers 7 ist (unter Berücksichtigung der an der Membrane 6 zu leistenden geringen Verformungsarbeit) erfindungsgemäß so gewählt, daß der Anzeigekörper 7 bei Druckanstieg im Topfinnenraum 14 unmittelbar oberhalb des Siedepunktdruckes aus seiner unteren Stellung in seine obere Anzeigestellung (gestrichelt wiedergegeben) springt, in welcher er mit seinem oberen Ende aus einer oberen Durchtrittsöffnung des Gehäuses 12 herausragt. Das schlagartige Hochschnappen des Anzeigekörpers 7 ist darauf zurückzuführen, daß die Fläche innerhalb der Kante 19, welche vor dem Anheben des Anzeigekörpers 7 mit dem Druck des Topfinnenraumes 14 beaufschlagt wird, unter Berücksichtigung der Faltung der Rollmembrane 6 wesentlich kleiner ist als die Gesamtfläche der Rollmembrane 6, welche nach dem Abheben der Kante 19 von der Oberfläche des Topfdeckels 2 für die Druckbeaufschlagung zur Verfügung steht. Ein umlaufender Flansch 15 des Anzeigekörpers 7 dient als Führung in dem Gehäuse 12 und als Anschlag an der oberen Wandung des Gehäuses 12. Aufgrund dieser Ausgestaltung hat die Druckanzeigeeinrichtung 4 eine Sprungcharakteristik mit im wesentlichen ebener Kennung. Das Gewicht des Anzeigekörpers 7 ist ferner so gewählt, daß die Anzeigeeinrichtung 4 beim Druckanstieg eher, d.h. bei niedrigerem Druck während der Einleitung des Kochvorganges bei üblicherweise höchstmöglicher Kochstufe der Wärmequelle, z.B. einer Kochplatte, anspricht als die Druck entlastungseinrichtung 5, aber nur unmittelbar oberhalb des Siedepunktdruckes. In dem Moment, in welchem die Druckanzeigeeinrichtung 4 das Erreichen des Siedepunktdruckes beim schnellen Ankochen auf der höchstmöglichen Kochstufe sprunghaft anzeigt, kann die Energiequelle, z.B. die Kochplatte bis auf die niedrigstmögliche Kochstufe zurückgeschaltet werden, also auf eine Kochstufe, bei welcher das Kochgut soeben noch bei etwa 100° C weiterkocht.

Die Druckentlastungseinrichtung 5 besteht aus einem Gehäuse 16, welches oberhalb einer Öffnung 17 des Topfdeckels 2, einen darin angeordneten Ventilsitz 9 übergreifend, befestigt ist. In dem Gehäuse 16 ist ein Ventilkörper 8 vertikal verschieblich geführt, und zwar in diesem Fall aufgrund einer Führungswandung 18 innerhalb des Gehäuses 16. In der dargestellten Schließstellung des Ventilkörpers 8 sitzt dieser mit einer unteren ringförmigen scharfen Kante 10 auf dem Ventilsitz 9 auf. Das Gewicht des Ventilkörpers 8 ist erfindungsgemäß so gewählt, daß er sich unter dem sich bei der niedrigstmöglichen Kochstufe einstellenden Topfinnendruck gerade anhebt. Wird also nach Ansprechen der Druckanzeigeeinrichtung 4 auf die niedrigstmögliche Kochstufe zurückgestellt, wird noch ein geringfügiger weiterer Druckanstieg im Topfinneren 14 stattfinden, dann aber das Öffnen der Druckentlastungseinrichtung 5 einen weiteren Anstieg verhindern. Aufgrund der ebenen Kennung der Druckentlastungseinrichtung 5 erfolgt ein Pendeln des Topfinnendruckes unmittelbar über dem normalen Siedepunktdruck mit geringer Amplitude. Die Regelamplitude soll nur wenige Bruchteile eines bar oder vorzugweise noch weniger betragen. Dadurch erfolgt eine Regelung der Siedetemperatur auf nahezu der Höhe der Siedetemperatur unter Normaldruck, was mit den üblichen Energiequellen, wie Kochplatten, wegen deren Trägheit nicht möglich ist. Wegen der Auswahl des Gewichtes des Ventilkörpers 8 und der ebenen Kennung der Druckentlastungseinrichtung 5 wird ferner gewährleistet, daß bei dem Kochvorgang trotz vergleichsweise hoher Temperatur nur geringe Wasserverluste eintreten. Der Kochvorgang ist hinreichend kurz, ohne zu hohe Temperaturen wie beim Dampfdruckkochen hinnehmen zu müssen. Dadurch ist eine schonende Behandlung des Kochgutes gewährleistet.

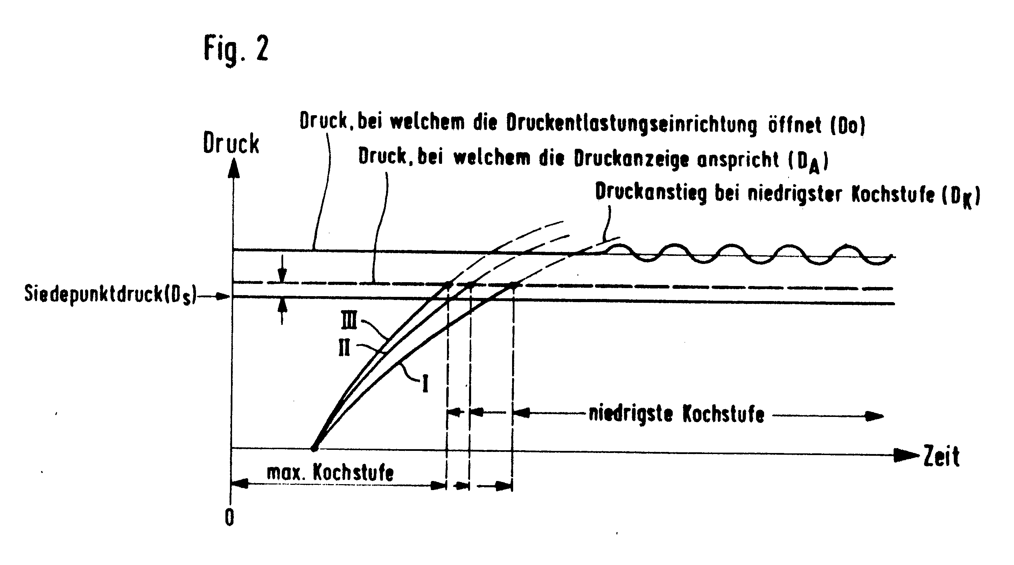

In Fig. 2 sind grafisch die Druckverhältnisse beim Kochen mit dem erfindungsgemäßen Kochtopf für verschiedene Umgebungsbedingungen (unterschiedlicher Umgebungsdruck) über der Zeit aufgetragen. Zunächst wird die maximale Kochstufe eingeschaltet. Nach einer vorgegebenen Zeit setzt der Druckanstieg im Topfinneren ein, und zwar zunächst bis der Siedepunktdruck DS erreicht ist. Unmittelbar oberhalb des Siedepunktdruckes DS, nämlich bei dem Druck DA, spricht die Druckanzeigeeinrichtung 4 an. In diesem Moment schaltet die Bedienungsperson auf die niedrigstmögliche Kochstufe um. Nach einem geringen weiteren Druckanstieg wird der Öffnungsdruck DO der Druckentlastungseinrichtung 5 erreicht. Diese öffnet und schließt dann unter Berücksichtigung ihrer ebenen Kennung so, daß ein Pendeln des Druckes um den Öffnungsdruck DO der Druckentlastungseinrichtung 5 mit geringer Amplitude erfolgt, wie dies am Beispiel der Druckkurve I veranschaulicht ist.

Bezugszeichenliste:

| | |
|---|---|
| 1 | Untertopf |
| 2 | Topfdeckel |
| 3 | Bajonettverschluß |
| 4 | Druckanzeigeeinrichtung |
| 5 | Druckentlastungseinrichtung |
| 6 | Membrane |
| 7 | Anzeigekörper |
| 8 | Ventilkörper |
| 9 | Ventilsitz |
| 10 | Kante |
| 11 | Dichtungsring |
| 12 | Gehäuse |
| 13 | Öffnung |
| 14 | Topfinnenraum |
| 15 | Flansch |
| 16 | Gehäuse |

17  Öffnung
18  Führungswandung
19  Kante

## Ansprüche

1. Kochtopf, bei welchem Untertopf (1) und Topfdeckel (2), beispielsweise mittels eines Bajonettverschlusses (3), druckdicht miteinander zu verbinden sind, mit einer dicht oberhalb des Siedepunktdruckes ansprechenden Druckanzeigeeinrichtung (4) und einer gesondert von der Druckanzeigeeinrichtung (4) ausgebildeten Druckentlastungseinrichtung (5), wobei die Druckanzeigeeinrichtung (4) aufgrund eines beweglichen Anzeigekörpers (7) eine möglichst ebene Kennung, d.h. eine im wesentlichen konstante Rückstellkraft aufweist, sowie beim Ankochen oberhalb des Siedepunktdruckes vor dem Öffnen der Druckentlastungseinrichtung (5) anspricht, dadurch gekennzeichnet, daß sich der Anzeigekörper (7) der Druckanzeigeeinrichtung (4) auf einer Seite einer Membrane (6), z.B. Rollmembrane, derart abstützt, daß der Anzeigekörper (7) ausschließlich oder praktisch ausschließlich aufgrund seines Eigengewichts der Verformung der Membrane (6) unter dem Topfinnendruck entgegenwirkt, daß die andere Seite der Membrane (6) über eine Öffnung (13) im Topfdeckel (2) dem Topfinnendruck ausgesetzt ist, daß die Druckentlastungseinrichtung (5) eine möglichst ebene Kennung, d.h. eine im wesentlichen konstante Rückstellkraft aufweist, indem ein Ventilkörper (8) ausschließlich oder praktisch ausschließlich aufgrund seines Eigengewichts in Schließrichtung beaufschlagt ist, sowie beim Weiterkochen unter dem sich beim Siedepunkt bei Umgebungsdruck, also nahe 100° C einstellenden Druck gerade öffnet.

2. Kochtopf nach Anspruch 1, dadurch gekennzeichnet, daß die Verformungen der Membrane (6) und damit die entsprechende Bewegung des Anzeigekörpers (7) hysteresefrei oder praktisch hysteresefrei, also insbesondere ohne Abstützung gegen eine Feder mit progressiver Kennung erfolgt.

3. Kochtopf nach Anspruch 1 oder 2, dadurch gekennzeichnet, daß der Anzeigekörper (7) axial geführt ist.

4. Kochtopf nach einem der Ansprüche 1 bis 3, dadurch gekennzeichnet, daß die Membrane (6) der Druckanzeigeeinrichtung (4) im Bereich der Anlagefläche des Anzeigekörpers (7) auf der dem Topfdeckel (2) zugewandten Seite eine eine Öffnung (13) des Topfdeckels (2) ringförmig umgebende scharfe Kante (19) aufweist, mit welcher sie vor dem Ansprechen der Druckanzeigeeinrichtung (4) an der Außenfläche des Topfdeckels (2) anliegt.

5. Kochtopf nach einem der Ansprüche 1 bis 4, dadurch gekennzeichnet, daß die Membrane (6) der Druckanzeigeeinrichtung (4) im Bereich der Anlagefläche des Anzeigekörpers (7) vor dem Ansprechen der Druckanzeigeeinrichtung (4) mit der dem Topfdeckel (2) zugewandten Seite an einer eine Öffnung (13) des Topfdeckels (2) ringförmig umgebenden scharfen Kante (19) des Topfdeckels (2) anliegt.

6. Kochtopf nach Anspruch 4 oder 5, dadurch gekennzeichnet, daß die innerhalb der scharfen Kante (19) liegende Fläche des Anzeigekörpers (7) geringer ist als die nach dem Ansprechen der Druckanzeigeeinrichtung (4) wirksam werdende Gesamtfläche der Membrane (6).

7. Kochtopf nach einem der Ansprüche 1 bis 6, dadurch gekennzeichnet, daß der Ventilkörper (8) der Druckentlastungseinrichtung (5) axial geführt und derart ausgebildet ist, daß er unter einem Topfinnendruck oberhalb eines vorgegebenen Wertes von einem Ventilsitz (9) abhebt und daß der Ventilkörper (8) insbesondere ohne Abstützung gegen eine Feder mit progressiver Kennung in Schließrichtung beaufschlagt ist.

8. Kochtopf nach Anspruch 7, dadurch gekennzeichnet, daß der Ventilkörper (8) der Druckentlastungseinrichtung (5) in Schließstellung mit einer eine Öffnung (17) des Topfdeckels (2) ringförmig umgebenden scharfen Kante (10) auf dem Ventilsitz (9) des Topfdeckels (2) aufsitzt.

9. Kochtopf nach Anspruch 7, dadurch gekennzeichnet, daß der Ventilkörper (8) der Druckentlastungseinrichtung (5) in Schließstellung auf einer eine Öffnung (17) des Topfdeckels (2) ringförmig umgebenden scharfen Kante (10) des Topfdeckels (2) aufsitzt.

## Claims

1. A cooking container in which the container base (1) and the cover (2) can be locked together in a pressure-tight manner, with the aid of a bayonet lock (3) for example, having a pressure indicator (4) responding to pressures just above the boiling point pressure and a pressure release device (5) formed separately from the pressure indicator (4), in which the pressure indicator (4) has the flattest possible characteristic, i.e., applies a substantially constant return force, by virtue of a mobile indicator body (7), and when cooking at pressures higher than the boiling point pressure responds before the pressure release device (5) can open, characterized in that the indicator body (7) of the pressure indicator (4) is supported on one side of a membrane (6), of the roll membrane type for example, in such a manner that the indicator body (7) exclusively or substantially exclusively counteracts the deformation of the membrane (6) under the internal container pressure by virtue of its dead weight, the other side of the membrane (6) being exposed to the internal container pressure through an orifice (13) in the cover (2), and the pressure release device (5) having the flattest possible characteristic, i.e., applying a substantially constant return force, whilst a valve body (8) is urged in the closure direction exclusively or substantially exclusively by virtue of its dead weight, and during continued cooking will open immediately the boiling point pressure attains the atmospheric pressure, i.e., at around 100 °C.

2. A cooking container as in Claim 1, characterized in that the deformation of the membrane (6) and the corresponding movement of the indicator body (7) take place entirely or substantially entirely without hysteresis, i.e., take place more specifically without the support of a spring producing a progressive characteristic.

3. A cooking container as in Claim 1 or 2, characterised in that the indicator body (7) is axially guided.

4. A cooking container as in any of Claims 1 to 3, characterized in that on the side of the membrane (6) of the pressure indicator (4) facing the cover (2), near the contact face of the indicator body (7), there is an annular sharp edge (19) surrounding an orifice (13) in the cover (2), which rests on the outer face of the cover (2) until there is a response from the pressure indicator (4).

5. A cooking container as in any of Claims 1 to 4, characterized in that until there is a response from the pressure indicator (4), the side of the membrane (6) of the pressure indicator (4) facing the cover (2), near the contact face of the indicator body (7), rests on an annular sharp edge (19) on the cover (2), surrounding an orifice (13) in the cover (2).

6. A cooking container as in Claim 4 or 5, characterized in that the surface area of the indicator body (7) lying within the sharp edge (19) is smaller than the total surface area of the membrane (6) coming into action after the pressure indicator (7) has responded.

7. A cooking container as in any of Claims 1 to 6, characterized in that the valve body (8) of the pressure release device (5) is axially guided and is shaped in such a manner that it lifts off a valve seating (9) when the internal container pressure rises above a prescribed level, the valve body (8) being controlled without the support of a spring giving a progressive closure characteristic.

8. A cooking container as in Claim 7, characterized in that in its closed position the valve body (8) of the pressure release device (5) lies on the valve seating (9) in the cover (2) with an annular sharp edge (10) surrounding an orifice (17) in the cover (2).

9. A cooking container as in Claim 7, characterized in that in its closed position the valve body (8) of the pressure release device (5) lies on an annular sharp edge (1) in the cover (2) surrounding an orifice (17) in the cover (2).

**Revendications**

1. Marmite de cuisson dans laquelle la marmite (1) et le couvercle (2) sont mutuellement assemblés de façon étanche à la pression par exemple par un emboîtement à baïonnette (3), comprenant un dispositif indicateur de pression (4) se déclenchant juste au-dessus de la pression du point d'ébullition et un dispositif de détente (5) réalisé séparément du dispositif indicateur de pression (4), le dispositif indicateur de pression (4), en ce qui concerne un organe indicateur mobile (7), présentant une caractéristique aussi plane que possible, c'est-à-dire une force de rappel sensiblement constante et, en cas de début de cuisson au-dessus de la pression du point d'ébullition, se déclenchant avant l'ouverture du dispositif de détente (5), *caractérisée* par le fait que l'organe indicateur (7) du dispositif indicateur de pression (4) s'appuie sur un côté d'une membrane (6), par exemple une membrane enroulée, de manière que l'organe indicateur (7) s'oppose exclusivement ou pratiquement exclusivement par son propre poids à la déformation de la membrane (6) sous l'effet de la pression interne de la marmite, que l'autre côté de la membrane (6), par une ouverture (13) pratiquée dans le couvercle de la marmite, est soumis à la pression interne de celle-ci, que le dispositif de détente (5) présente une caractéristique aussi plane que possible, c'est-à-dire une force de rappel sensiblement constante, en ce sens qu'un clapet (8) est sollicité dans le sens de la fermeture exclusivement ou pratiquement exclusivement par son propre poids, et, lors de la cuisson, s'ouvre juste à la pression régnant au point d'ébullition à la pression ambiante, donc voisine de 100° C.

2. Marmite de cuisson selon la revendication 1, *caractérisée* par le fait que les déformations de la membrane (6) et, par conséquent, le déplacement correspondant de l'organe indicateur (7) se produisent sans hystérésis ou pratiquement sans hystérésis, donc en particulier sans appui contre un ressort à caractéristique progressive.

3. Marmite de cuisson selon la revendication 1 ou 2, *caractérisée* par le fait que l'organe indicateur (7) est guidé axialement.

4. Marmite de cuisson selon l'une des revendications 1 à 3, *caractérisée* par le fait que la membrane (6) du dispositif indicateur de pression (4) dans la zone de la surface d'appui de l'organe indicateur (7) sur le côté tourné vers le couvercle (2) de la marmite, présente une arête vive (19) entourant en forme d'anneau une ouverture (13) du couvercle (2) et par laquelle elle vient s'appliquer sur la surface externe du couvercle (2) avant le déclenchement du dispositif indicateur de pression (4).

5. Marmite de cuisson selon l'une des revendications 1 à 4, *caractérisée* par le fait que la membrane (6) du dispositif indicateur de pression (4), dans la zone de la surface d'appui de l'organe indicateur (7) et avant le déclenchement du dispositif indicateur de pression (4), vient s'appliquer par son côté tourné vers le couvercle (2) de la marmite sur une arête vive (19) du couvercle (2) entourant en forme d'anneau une ouverture (13) du couvercle (2).

6. Marmite de cuisson selon la revendication 4 ou 5, *caractérisée* par le fait que la surface de l'organe indicateur (7) se trouvant à l'intérieur de l'arête vive (19) est plus petite que la surface totale de la membrane (6) agissant après le déclenchement du dispositif indicateur de pression (4).

7. Marmite de cuisson selon l'une des revendications 1 à 6, *caractérisée* par le fait que le clapet (8) du dispositif de détente (5) est guidé axialement et est réalisé de manière qu'il se soulève d'un siège (9) à une pression interne de la marmite se situant au-dessus d'une valeur prédéterminée et que le clapet (8) est sollicité dans le sens de la fermeture, en particulier sans appui contre un ressort à caractéristique progressive.

8. Marmite de cuisson selon la revendication 7, *caractérisée* par le fait que le clapet (8) du dispositif de détente (5) à la position de fermeture repose sur le siège (9) du couvercle (2) par une arête vive (10) entourant en forme d'anneau une ouverture (17) du couvercle (2).

9. Marmite de cuisson selon la revendication 7, *caractérisée* par le fait que le clapet (8) du dispositif de détente (5) en position de fermeture repose sur une arête vive (10) du couvercle (2) entourant en forme d'anneau une ouverture (17) du couvercle (2).

Fig. 1

EP 0 177 720 B1

# Fig. 2

Druck, bei welchem die Druckentlastungseinrichtung öffnet (Do)

Druck, bei welchem die Druckanzeige anspricht ($D_A$)

Druckanstieg bei niedrigster Kochstufe ($D_K$)

Druck

Siedepunktdruck($D_S$)

III
II
I

niedrigste Kochstufe

max. Kochstufe

Zeit

0

EP 0 177 720 B1